# EUROPEAN PATENT APPLICATION

(11) **EP 3 573 007 A1**
(43) Date of publication of application: **27.11.2019**
(21) Application number: 18741207.7
(22) Date of filing: 16.01.2018
(51) Int. Cl.: G06Q 30/06, G06Q 20/12, G06Q 20/22, G06Q 20/38, G06Q 30/02, G06Q 40/02, G06Q 20/40

(54) **PROCESSING SYSTEM AND METHOD FOR SUPPORTING ADVANCE PURCHASE**

(30) Priority: 17.01.2017 KR 20170008264
(71) Applicant: Nam, Ki-won, Seoul 06159 (KR)
(72) Inventor: PARK, Gil-Ju, Daejeon 34022 (KR); YI, Ju Won, Seoul 06701 (KR)
(74) Representative: Zardi, Marco
(86) International application number: PCT/KR2018/000741
(87) International publication number: WO 2018/135835

(57) **Abstract**

The present invention relates to a processing system and method for supporting an advance purchase, and has an object to provide to a processing system and method for supporting an advance purchase, in which, through advance purchase orders for consumption of products inevitable in the future, a company provides a support money to a user in advance via a financial company so as to allow the user to use the support money for consumption that is irrelevant to the current company, and thus the consumption may be boosted and future customers may be secured in advance, as well as the financial company provides the support money based on individual credit, such that risks may be distributed and an additional model for evaluating the credit of the company is not required.

## Description

### [Technical Field]

The present invention relates to a processing system and method for supporting an advance purchase, and more specifically, to a processing system and method for supporting an advance purchase, in which, through advance purchase orders for consumption of products inevitable in the future, a company provides a support money to a user in advance via a financial company so as to allow the user to use the support money for consumption that is irrelevant to the current company, and thus the consumption may be boosted and future customers may be secured in advance, as well as the financial company provides the support money based on individual credit, such that risks may be distributed and an additional model for evaluating the credit of the company is not required.

### [Background Art]

As well known in the art, in accordance with recent development of information communication technology, a technology for information service that provides information on various fields by wide area data communication network in real time to multiple subscribers through at least one or more host servers has been actively developed.

Based on the technology, recently, a peripheral technology such as a cache memory expansion technology for more rapidly providing accurate information to a subscriber, and an information sorting and compression technology for more conveniently accessing taste and preference of the subscriber have been developed. Accordingly, development of various contents and solutions therethrough is also accelerated.

A capitalist society has a structure in which manufacturing, sales, consumption, and marketing activities of products are organically connected with each other to form a cycle, and added values are created at each point on the cycle.

In addition, a marketing element is positioned between the sale and the consumption to promote the consumption. For the marketing, there are a case of discounting a price of the product at the time of purchase, a case of providing an additional gift when purchasing the product, and a case of giving a benefit when making a reservation for a future consumption in advance.

Similarly, Korean Patent Laid-Open Publication No. 10-2015-71073 discloses a technique related to a discount of a product through a pre-purchase.

However, in the case of marketing through such a pre-purchase reservation, due to various limiting factors, it is difficult to activate the marketing, and there are problems as follows.

First, since the benefit to be given to the user through existing pre-purchase reservation of the product is provided when actually purchasing the product, a power to attract the purchase is not large.

Second, when giving a benefit to the user in advance through the existing pre-purchase reservation of the product, the company should provide funds to the user in advance even when a sale does not occur immediately. Therefore, in the case of a company that does not have enough funds, there is an economic burden.

Third, the existing technique that gives a benefit to the user through the pre-purchase reservation of the product is related to a 1:1 contract between the user and the company. Therefore, it may be difficult to apply sanctions when the purchase is not executed by the user, or the sanctions may not be realistic.

Fourth, in a case of financial services, there are loan products on security of sales, which give a loan by statistically predicting future sales of the company, but 3,000 new affiliates are created and 2,000 affiliates are closed each day in Korea. Considering such a current situation, a risk of the loan product on security of sales for the financial company is not small.

### [Summary of Invention]

### [Problems to be Solved by Invention]

In consideration of the above-described circumstances, it is an object of the present invention to provide a processing system and method for supporting an advance purchase, in which, through advance purchase orders for consumption of products inevitable in the future, a company provides a support money to a user in advance via a financial company so as to allow the user to use the support money for consumption that is irrelevant to the current company, and thus the consumption may be boosted and future customers may be secured in advance, as well as the financial company provides the support money based on individual credit, such that risks may be distributed and an additional model for evaluating the credit of the company is not required.

### [Means for Solving Problems]

To achieve the above object, according to an aspect of the present invention, there is provided a processing system for supporting an advance purchase, including: a user terminal 2 having an advance purchase support application 4 installed therein, which is configured to allow a user to browse member company group information, request an advance purchase by designating a predetermined product, receive a support money as a reward for the advance purchase, and store advance purchase information of the user; a financial company server 10 configured to provide a user's advance purchase support money for the product in a loan form, and automatically repay the support money at the time of actual payment for the product; and an advance purchase support server 20 configured to receive member companies that contract providing the support money for the advance purchase to upload the member company group information so as to be browsed by the user, calculate the support money according to a support rate set for each company and each product, request the financial company server 10 to pay the support money and receive the same, and process actual purchase information on the advance purchase product.

Preferably, when selecting a company to receive the advance purchase support money, the user selects a plurality of companies, and the advance purchase support server 20 processes so that the support money is added up and used.

Preferably, the member company group information provided by the advance purchase support server 20 includes support rate information by company and support rate information by product, and the information is provided so that the support rates are displayed as cash applied to the product, and an actual purchase deadline for the advance purchase product is displayed.

Preferably, the member company group information provided by the advance purchase support server 20 further includes option information which is condition information so as to further support an additional support money.

Preferably, the advance purchase support server 20 issues advance purchase certificates to be an advance purchase target by each product, and provides the issued advance purchase certificates to the advance purchase support application 4, the company terminal 6, and the financial company server 10.

Preferably, the option information includes different support money information depending on an actual purchase time zone matched by each company and by each product.

Preferably, when the actual purchase is performed earlier than the actual purchase deadline, the option information may be set so as to provide larger additional support money than a case of performing the actual purchase at a later time.

Preferably, when the user has a credit card, the support money is provided so that a sum thereof does not exceed a credit limit of the user.

Preferably, if the user does not have a credit card but has a cash card, the support money is provided so that a sum thereof does not exceed a balance of the user's cash card.

Preferably, when the user does not have a credit card, the support money is provided so that a sum thereof does not exceed a limit amount of a consumption calculation card provided by the financial company server 10.

Preferably, an advance purchase certificate 62 includes issue code information 64 issued by the advance purchase support server 20; and product information 66 consisting of company information, product information, and option information including a visit time and use limit information.

Preferably, the advance purchase certificate 62 further includes a QR code 68 containing issue code information 64.

Preferably, when the user actually pays for the advance purchase product, the advance purchase support server 20 receives a payment request signal for the advance purchase product from the advance purchase support application 4 or the company terminal 6, and provides payment request information thereof to the financial company server 10.

Preferably, when the user actually pays for the advance purchase product, the financial company server 10 automatically subtracts the support money for the product from a payment amount, and provides a balance to the company, thereby a repayment for the support money is automatically performed.

Preferably, a plurality of users form a consumption-sharing group, in which the support money is managed by accumulating so as to be jointly used, in the advance purchase support server 20, thereby processing so that the support money for the group purchase of the group members is managed by accumulating and being jointly used.

Preferably, the advance purchase support server 20 manages in such a way that accumulated amounts and used amounts of the accumulated support moneys by each individual of the group members are calculated, thereby completing a calculation of the support money upon withdrawal from the group.

Preferably, the advance purchase support server 20 includes: a company information manager 26 configured to provide the support money for an advance purchase request of the user, and register and manage information on a member company that requests for automatic generation of a loan; a product information manager 28 configured to register and manage product information to be sold and support money information for the advance purchase by each product; an option information manager 30 configured to register and manage option information to which an additional support money is provided for the advance purchase by each product; a support money calculation unit 34 configured to calculate a support money to be provided to the user depending on the support money information for the advance purchase by each product and whether or not the option is selected; an advance purchase certificate issuing unit 32 configured to select an advance purchase for a specific product and issue an advance purchase certificate containing related information to the user who received the support money as a reward; a support money information manager 40 configured to provide advance purchase user information, information of companies and products, the support money information and advance purchase certificate information to the financial company server 10 to automatically give the support money as a loan; and a controller 44 configured to provide the support money to the user who has selected the advance purchase for a specific product as the reward, and control the advance purchase support server and the financial company server so as to automatically repay the loan by monitoring whether the advance purchase is executed.

Preferably, the advance purchase support server 20 further includes: a user information manager 24 configured to store personal information of the user, unique identification information of the advance purchase support application 4 installed in the user terminal 2, product information to which the advance purchase is set, and advance purchase information thereof.

Preferably, the advance purchase support server 20 further includes: a certificate issue limit manager 36 configured to manage the advance purchase certificate to be issued within a credit rating of the user, a deposit balance of the user, or a consumption limit allowed to the user by the financial company.

Preferably, the advance purchase support server 20 further includes: a repayment information manager 38 configured to update and manage repayment information processed by executing the purchase of a product in which the advance purchase is designated by the user.

Preferably, the advance purchase support server 20 further includes: a non-executed certificate processer 42 configured to, when the user does not execute an actual purchase for the product designated for the advance purchase within an advance purchase execution period, process the advance purchase certificate as a non-executed certificate, and provide information so as to subtract the support money from points of the user accumulated in the financial company, generate a credit loan, or subtract the support money from the balance of the user.

According to another aspect of the present invention, there is provided a method for supporting an advance purchase, including the steps of: a) requesting an advance purchase support server 20 for an advance purchase by selecting a predetermined company among advance purchase target companies uploaded to the advance purchase support server 20 and a product thereof through an advance purchase support application 4 installed in a user terminal; b) calculating a support money for advance purchase of the product by the advance purchase support server 20; c) requesting a financial company server 10 for the support money for advance purchase of the product by the advance purchase support server 20; d) providing the support money to the user by the financial company server 10; e) issuing an advance purchase certificate to the company and the user by the advance purchase support server 20; f) purchasing a product corresponding to the advance purchase certificate through the advance purchase support application 4 of the user terminal to repay the support money.

Preferably, the method further includes the steps of: before step a), attracting a company to provide a predetermined support money to the user in advance for the product selected by the advance purchase of the user by the advance purchase support server 20; and uploading company information.

Preferably, the method further includes the step of: before step a), establishing a group in the advance purchase support server 20 so that an advance purchase support money is accumulated in a group unit, and registers information on group members; and further including the steps of: in step d), providing the support money in the group unit by the financial company server 10; and accumulating the support money in the group unit by the advance purchase support server 20.

Preferably, the method further includes the step of: after the step f), when the support money is accumulated in the group unit, calculating the accumulated support money by each individual upon using the accumulated support money, by the advance purchase support server 20.

Preferably, the step a) further includes the steps of: browsing information on advance purchase target companies uploaded to the advance purchase support server 20 through the advance purchase support application 4; updating a list of browsing information of the user by the advance purchase support server 20; and providing the browsing information to a browsing target company by the advance purchase support server 20.

Preferably, the step f) further includes the steps of: applying specific advance purchase certificate information and a payment signal for an advance purchase product to a company terminal 6 or the advance purchase support server 20 through the advance purchase support application 4; providing the advance purchase certificate information to the financial company server 10 by the advance purchase support server 20; receiving a card payment request signal from a card payment terminal 8 of a company by the financial company server 10; automatically subtracting the support money included in the advance purchase certificate information by the financial company server 10; and transferring a balance from which the support money is subtracted to an account of the company by the financial company server 10.

Preferably, the method further includes the steps of: transmitting the advance purchase certificate information and repayment information of the support money to the advance purchase support server 20 by the financial company server 10; and providing the repayment information to the company terminal 6 and the advance purchase support application 4 by the advance purchase support server 20.

Preferably, the method further includes the step of: in the step d), determining whether a credit limit of the user to whom the support money is to be paid through the advance purchase is greater than a sum of unpaid support money of the user by the financial company server 10.

Preferably, the method further includes the steps of: in the step d), determining whether a cash balance of the user to whom the support money is to be paid through the advance purchase is larger than a sum of the unpaid support money of the user by the financial company server 10; or determining whether a consumption limit amount assigned by the financial company server 10 for each user is greater than a sum of unpaid support money of the user.

Preferably, in step a), when a user sets an advance purchase for a specific company and a certain amount, the method further includes the step of: in the step b), calculating a certain ratio for an advance purchase amount by the specific company as the support money to request a support.

Preferably, the method further includes the steps of: in the step f), when the advance purchase support application 4 purchases a product corresponding to a specific advance purchase certificate to repay the support money, if cash is selected as a payment means thereof, transmitting the advance purchase certificate information to the advance purchase support server 20 or the financial company server 10, and transferring a price of the product by the advance purchase support application 4; transmitting the advance purchase certificate information and a payment completion signal to the company terminal 6 by the advance purchase support server 20 or the financial company server 10; and transmitting a price obtained by subtracting the support money to an affiliate, and transmitting advance purchase certificate information by the advance purchase support server 20 or the financial company server 10.

Preferably, the method further includes the step of: in the step f), when a price fluctuation occurs in the product corresponding to the specific advance purchase certificate, processing so that a fluctuating amount in the price is applied to the price of the product when actually purchasing the product by the user, by the advance purchase support server 20.

### [Advantageous Effects]

According to the processing system and method for supporting an advance purchase of the present invention, the user may receive a reward due to a commitment to determine inevitable consumption of products in the future, and may use the received reward at the present time, such that it is possible to activate the consumption by lowering the economic burden on the current consumption. In addition, the selling company may automatically receive the support money which is currently paid by contracting a future consumption from the financial company. Therefore, there is no economic burden on the support money, and there is an advantage that future customers can be secured in advance. Further, the financial company gives a loan for the support money of the selling company for the future consumption of the user in advance, but when the actual consumption is performed, the loan is automatically repaid, while a debt is transferred to the user when the consumption is not executed by the user. Therefore, the risk is dispersed by individuals, and a support scale of the support money is also set within the credit limit. As a result, it has an advantage that the loan is a safe FinTech product with little risk.

### [Brief Description of Drawings]

FIG. 1 is a block diagram illustrating processes of automatically processing loan and repayment through a processing system for supporting an advance purchase according to an embodiment of the present invention.
FIG. 2 is a block diagram illustrating processes of advance purchase and current purchase through the processing system for supporting an advance purchase according to the embodiment of the present invention.
FIG. 3 is a block diagram illustrating advance purchase selection option information included in the processing system for supporting an advance purchase according to the embodiment of the present invention.
FIG. 4 is a block diagram illustrating an advance purchase limit deadline by each product through the processing system for supporting an advance purchase according to the embodiment of the present invention.
FIG. 5 is a schematic view illustrating a state in which a support money is varied depending on an actual purchase date fluctuation through the processing system for supporting an advance purchase according to the embodiment of the present invention.
FIG. 6 is a block diagram illustrating a configuration of an advance purchase support server included in the processing system for supporting an advance purchase according to the embodiment of the present invention.
FIG. 7 is a schematic view illustrating processes of providing the support money and issuing an advance purchase certificate through the processing system for supporting an advance purchase according to the embodiment of the present invention.
FIG. 8 is an exemplary view illustrating a screen for selecting advance purchase information in an application included in the processing system for supporting an advance purchase according to the embodiment of the present invention.
FIG. 9 is an exemplary view illustrating a configuration of the advance purchase certificate distributed through the processing system for supporting an advance purchase according to the embodiment of the present invention.
FIG. 10 is a block diagram illustrating a process of repaying the advance purchase certificate through the processing system for supporting an advance purchase according to the embodiment of the present invention.
FIG. 11 is a block diagram illustrating a process of managing a personal limit of the advance purchase certificate distributed through the processing system for supporting an advance purchase according to the embodiment of the present invention.
FIG. 12 is a schematic view illustrating an advance purchase support process to be processed in a group unit through the processing system for supporting an advance purchase according to the embodiment of the present invention.

### [Mode for Carrying out Invention]

Hereinafter, the present invention will be described in detail with reference to the accompanying drawings.

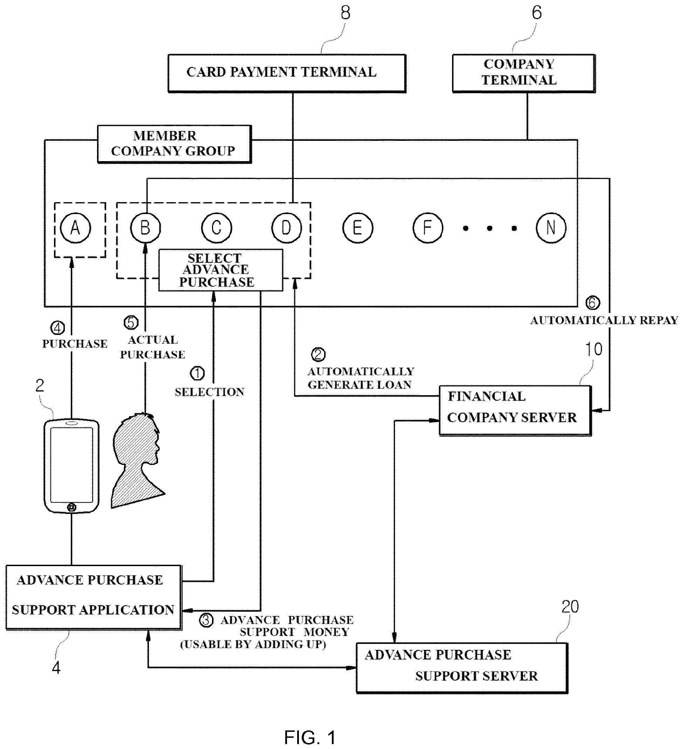

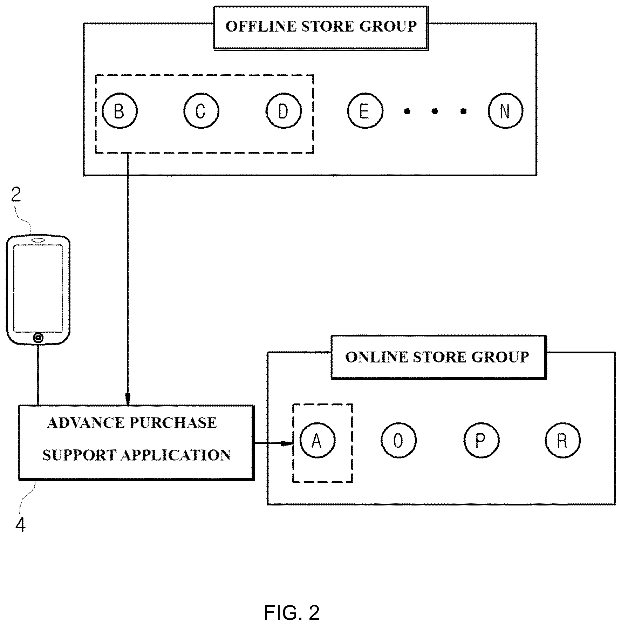

FIG. 1 is a block diagram illustrating processes of automatically processing loan and repayment through a processing system for supporting an advance purchase according to an embodiment of the present invention, and FIG. 2 is a block diagram illustrating processes of advance purchase and current purchase through the processing system for supporting an advance purchase according to the embodiment of the present invention.

Referring to FIG. 1, the processing system for supporting an advance purchase according to the embodiment of the present invention is a system, in which, through advance purchase orders for consumption of products inevitable in the future, a company provides a support money to a user in advance via a financial company so as to allow the user to use the support money for consumption that is irrelevant to the current company, and thus the consumption may be boosted and future customers may be secured in advance, as well as the financial company provides the support money based on individual credit, such that risks may be distributed and an additional model for evaluating the credit of the company is not required.

More specifically, the processing system for supporting an advance purchase according to the embodiment of the present invention includes a new concept FinTech service, and may provide a stable financial service while activating the consumption. The new concept FinTech service has several characteristic elements. As a result, the characteristics of the new concept FinTech service may be regarded as characteristics of the processing system for supporting an advance purchase according to the embodiment of the present invention.

First, the processing system for supporting an advance purchase according to the embodiment of the present invention is a system having characteristics that future inevitable consumption such as purchase of meals, clothing, or shoes is reserved in advance, and a support money provided as a reward for the purchase reservation may be used in other current consumptions.

In particular, it is possible to accumulate and use the support money provided as the reward of the purchase reservation for the future inevitable consumption. Therefore, by designating future inevitable consumption such as a car repair in the car center and oil refilling, meals, etc., and by receiving the support money as a reward through the purchase reservation, the current consumption may be promoted.

The supports provided as the reward of the purchase reservation are different from each other depending on each company or product. Therefore, if a price of the product is expensive, a support money may be provided enough to purchase one specific product free of charge at the present time, even when performing only reserving about three types of future consumption.

Accordingly, since a user should determine what company's product is purchased by reservation, naturally, the processing system for supporting an advance purchase according to the embodiment of the present invention allows the user to browse a plurality of products in advance. This ultimately enables the user to naturally browse an advertisement service for a user himself or herself benefit.

In particular, since the user browses a specific product to be purchased almost certainly in the future, the user needs to examine product information more closely, and advertising effects may be further increased.

Meanwhile, according to the processing system for supporting an advance purchase according to the embodiment of the present invention, a financial company server 10 provides a loan service on security of advance purchase, so that the advance purchase target companies do not have an economic burden on providing the support money, and financial companies have no risk for the loan. Therefore, when the financial company server 10 gives the support money as a loan to the advance purchase target companies, but the advance purchase fails, a debt is transferred from the company to the user so that the user has the debit to repay the loan.

More specifically, a subject for generating a loan of the support money is an affiliate, and a subject for receiving and using the support money is the user, and when the user purchases an advance purchase product, the loan is automatically repaid during a payment process thereof. However, if the user does not purchase the advance purchase product, a debit for the loan corresponding to the support money is assigned to the user.

The loan service on security of advance purchase having the above-described characteristics is one of the most important characteristics of the present invention.

In the case of the loan service on security of advance purchase of the processing system for supporting an advance purchase according to the embodiment of the present invention, a loan requestor and a repayment person may be the same as or different from each other depending on a purchase time of the product and whether or not to purchase the product.

That is, when actual purchases of the user are performed based on the commitment of the advance purchase product in advance, the loan, that is, the support money of the user may be automatically repaid at the same time as the payment. In this case, the loan requester and the repayment person are the same as each other.

On the other hand, if the user does not execute the advance purchase due to a change of heart or economic circumstances of the user, the user should repay the loan for the support money. In this case, the loan requestor and the repayment person are different from each other.

More specifically, the processing system for supporting an advance purchase according to the embodiment of the present invention includes: a user terminal 2 having an advance purchase support application 4 installed therein, which is configured to allow a user to browse member company group information, request an advance purchase by designating a predetermined product, receive a support money as a reward for the advance purchase, and store advance purchase information of the user; a financial company server 10 configured to provide a user's advance purchase support money for the product in a loan form, and automatically repay the support money at the time of actual payment for the product; and an advance purchase support server 20 configured to receive member companies that contract providing the support money for the advance purchase to upload the member company group information so as to be browsed by the user, calculate the support money according to a support rate set for each company and each product, request the financial company server 10 to pay the support money and receive the same, and process actual purchase information on the advance purchase product.

At this time, when selecting a company to receive the advance purchase support money by the user, the user may select a plurality of companies, and the advance purchase support server 20 may process so that the support money is added up and used by the user.

Meanwhile, the advance purchase support server 20 attracts companies that provide the user with a predetermined support money in advance for the product selected for the advance purchase of the user, and uploads company information.

Of course, the company information to be joined to the member company includes product information to be sold. The advance purchase support server 20 provides the company information and the product information to the user to be browsed.

Preferably, the user may browse the company information and the product information through the advance purchase support application 4 of the user terminal 2. The advance purchase support application 4 may further include a shopping cart to store the advance purchase products for each user in the shopping cart.

In addition, the member company group information provided by the advance purchase support server 20 includes support rate information by company and support rate information by product. The information is provided so that the support rates are displayed as cash applied to the product, and an actual purchase deadline for the advance purchase product is displayed.

Thereby, the user may receive information on how much support money can be supported when performing the advance purchase of a certain product, and may browse information until when he or she actually purchases the product through the advance purchase support server 20 and the advance purchase support application 4.

In the processing system for supporting an advance purchase according to the embodiment of the present invention, when the user actually makes a payment for the advance purchase product, the advance purchase support server 20 performs repayment processing for the loan of the support money by using each payment means. Therefore, it is preferable that, when the user actually pays for the advance purchase product, the advance purchase support server 20 receives a payment request signal for the advance purchase product from the advance purchase support application 4 or the company terminal 6, and provides payment request information thereof to the financial company server 10.

Further, when the user actually pays for the advance purchase product, the advance purchase support server 20 simultaneously receives the payment request signal for the advance purchase product from the advance purchase support application 4 and the company terminal 6, determines the authenticity of the payment signal, and then processes so that the financial company server 10 performs the payment.

In addition, the repayments of the loan in the processing system for supporting an advance purchase according to the embodiment of the present invention are slightly different depending on the payment means, which will be described in detail below.

Subsequently, when performing the actual payment of the user for the advance purchase product, the financial company server 10 automatically subtracts the support money for the product from a payment amount, and provides the balance to the company, thereby the repayment for the support money is automatically performed.

Hereinafter, an operation of the processing system for supporting an advance purchase according to the embodiment of the present invention having the above-described configuration will be schematically described.

First, the user may browse the advance purchase target company and the product information uploaded to the advance purchase support server 20 through the advance purchase support application 4. Therefore, the user selects a future advance purchase product, in particular, a product that is essentially inevitable to be consumed, and contracts the future consumption. Accordingly, during browsing the product information, the user browses the information in a very detailed manner and fully knows the contents. Therefore, the service provided by the processing system for supporting an advance purchase according to the embodiment of the present invention provides a very effective advertising tool.

The user selects a product of a predetermined company from among the browsed products and requests the advance purchase to the advance purchase support server 20. At this time, the advance purchase request means that the user contracts the future consumption.

Then, the advance purchase support server 20 calculates the support money for the purchase reservation of the product.

Preferably, whenever the user selects a product to be a target of the advance purchase through the advance purchase support application 4, and more preferably, whenever the user puts a product code in the advance purchase shopping cart, the advance purchase support server 20 calculates support money information that can be supported in real time, and provides the calculated information to the advance purchase support application 4 of the user.

Therefore, when the user performs the advance purchase of certain products, it is possible to confirm how much currently instantly available cash can be paid in real time.

At this time, if the user confirms the support money of the selected product through the advance purchase support application 4, and then finally generates a signal for the advance purchase, the advance purchase support server 20 requests the support money for the purchase reservation of the product to the financial company server 10.

In other words, if an affiliate contracts the future purchase for a specific product, it seems that the affiliate is a subject that provides a certain support money at the present time. However, actually, the financial company automatically generates a loan for the amount corresponding to the support money of the affiliate, and the support money is directly provided to the user by the financial company.

When the provision of the support money is completed, the advance purchase support server 20 issues an advance purchase certificate to the company and the user.

The advance purchase certificate includes details of the commitment to purchase the certain product in the future.

Thereafter, when the user purchases the product corresponding to the advance purchase certificate through the advance purchase support application 4, the advance purchase support server 20 or the financial company server 10 processes so as to automatically repay the support money corresponding to the advance purchase product.

Even when the user does not contract a future purchase for a specific company or product, and sets a future advance purchase for a certain amount of a specific company, it is possible to provide a certain support money. Even in this case, it is possible to process so that the specific company calculates a certain ratio for an advance purchase amount as the support money to request the support.

Hereinafter, the loan service regarding security of advance purchase provided by the processing system for supporting an advance purchase according to the embodiment of the present invention will be described by comparing with existing credit cards, accumulated points or coupon services.

First, in the case of a conventional credit card service, the user may use his or her credit card to spend in about one month between a purchase date and a repayment date within a limit range. That is, in the case of the conventional accumulated point or coupon service, if a predetermined number of products are actually purchased, the accumulated points generated due to past consumption histories may be used for current consumption, such as providing one chicken free of charge when purchasing 10 chickens. Therefore, these are not to secure future regular customers, but merely to give a benefit to the past regular customers.

However, the service of the present invention promotes the current consumption through the future consumption commitment, and it is possible to secure the future regular customers through the provision of the current support money, and in this aspect, there is a significant difference from the ordinary credit card service.

Meanwhile, the user receives the support money that can be currently used as a reward for the commitment of future product purchase provided by the processing system for supporting an advance purchase according to the embodiment of the present invention. Similar to the conventional credit card, there is a gap in time between the consumption and the repayment. However, there is a difference from the credit card in that the affiliate provides the support money to the user, but if the support money is not repaid due to the advance purchase product is not purchased, the debit for the support money is transferred to the user. In other words, there is a difference therebetween in an aspect that the risk to the financial company is reduced and dispersed, and if the actual purchase is not performed, there is no risk to the affiliate.

In this processing system for supporting an advance purchase according to the embodiment of the present invention, companies that provide the support money may include not only online companies but also offline companies. The target companies in which the provided support money can be used by the user may also include any company without limitation thereof.

However, a company that wishes to provide the support money to the user through the processing system for supporting an advance purchase according to the embodiment of the present invention should subscribe as a member company of the present service, and separately apply and contract through the advance purchase support server 20.

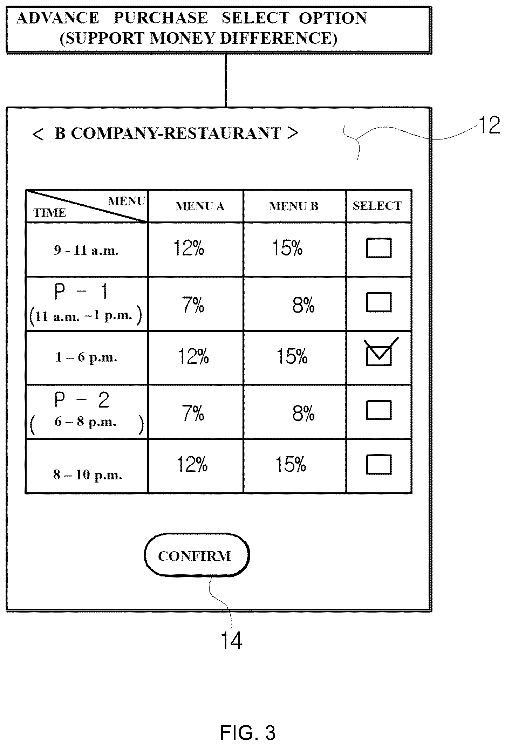

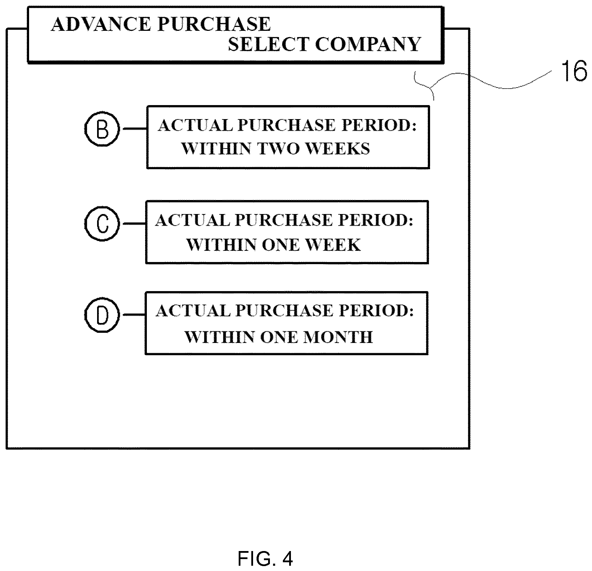

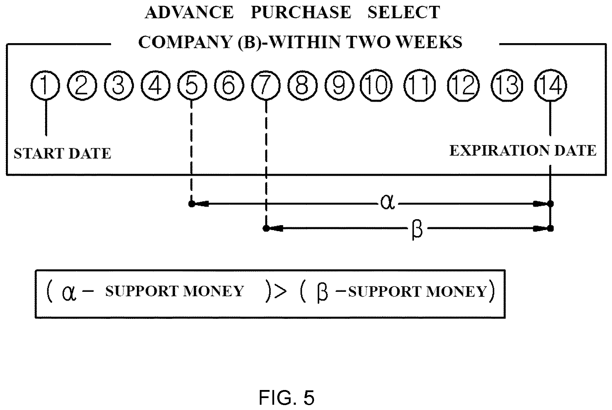

FIG. 3 is a block diagram illustrating advance purchase selection option information included in the processing system for supporting an advance purchase according to the embodiment of the present invention, FIG. 4 is a block diagram illustrating an advance purchase limit deadline by each product through the processing system for supporting an advance purchase according to the embodiment of the present invention, and FIG. 5 is a schematic view illustrating a state in which the support money is varied depending on an actual purchase date fluctuation through the processing system for supporting an advance purchase according to the embodiment of the present invention.

Referring to FIGS. 3 to 5, a scale of the support money to be provided to the user through the processing system for supporting an advance purchase according to the embodiment of the present invention is determined by the company. Therefore, the companies may present a fluctuating amount in the support money depending on their various circumstances.

Then, it is possible to provide option information for paying the support money in a fluctuating manner to the user. The member company group information provided by the advance purchase support server 20 further includes option information which is condition information for further supporting an additional support money.

For example, the option information includes various conditions depending on the selling situation of the selling companies, and the server may present the option information to the user. Typically, the option information may include information such as a sale time zone and an actual purchase time.

An example of a typical industry in which the sale time zone is provided as an option is a restaurant. In a case of the restaurant, there are times when visitors are not concentrated during the day. If the actual purchase is performed during that time, the restaurant may provide the additional support money to the user, and the information is uploaded to the advance purchase support server 20.

Therefore, it is preferable that the advance purchase support server 20 includes a table 12 for option information by each company stored therein, and provides the table to the advance purchase support application 4 of the user, such that the user selects the option information to generate an advance purchase signal.

In addition, another example of the option information is a time for an actual purchase deadline. That is, it is preferable that the advance purchase support server 20 includes a table 16 for actual purchase deadline information by each company stored therein, and provides the table to the advance purchase support application 4 of the user, such that the user selects the actual purchase deadline information to generate an advance purchase signal.

Preferably, if the actual purchase deadline is early, it is natural to receive larger support money than a case of the actual purchase deadline is later.

In addition, depending on the company or the product, the actual purchase deadline may be fixed, and the selling companies may determine whether they select the actual purchase deadline.

Meanwhile, when the actual purchase is performed earlier than the actual purchase deadline, the option information may be set so as to provide larger additional support money than a case of performing the actual purchase at a later time.

That is, even when the actual purchase deadline is set to one month, the user may perform the actual purchase tomorrow, or may perform the actual purchase after one month elapses. It may also be possible to provide larger support money to the user who has performed the actual purchase at an earlier time.

Therefore, within the actual purchase deadline, it is possible to set so as to further provide the support money by each company in proportion to the remaining days from a time when the actual purchase is performed to the actual purchase deadline.

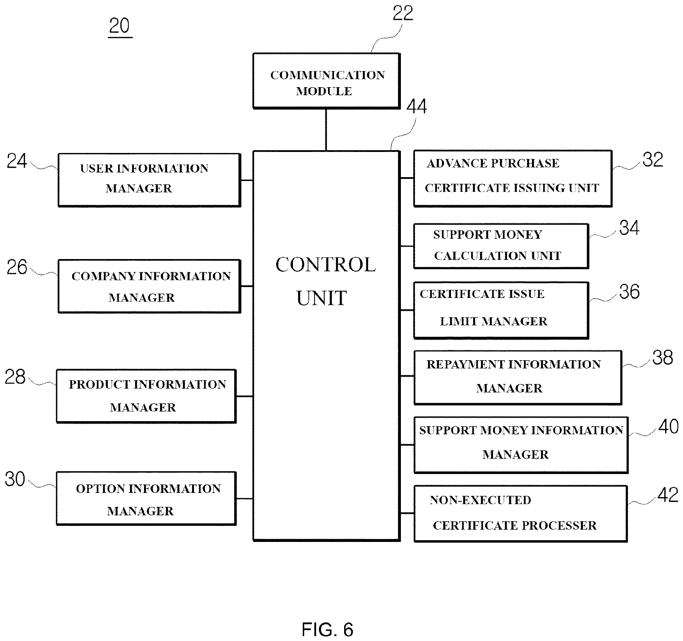

FIG. 6 is a block diagram illustrating a configuration of the advance purchase support server included in the processing system for supporting an advance purchase according to the embodiment of the present invention.

Referring to FIG. 6, the advance purchase support server 20 included in the processing system for supporting an advance purchase according to the embodiment of the present invention includes: a company information manager 26 configured to provide the support money for an advance purchase request of the user, and register and manage information on a member company that requests for automatic generation of a loan; a product information manager 28 configured to register and manage product information to be sold and support money information for the advance purchase by each product; and an option information manager 30 configured to register and manage option information to which an additional support money is provided for the advance purchase by each product.

In addition, the advance purchase support server 20 includes a communication module 22 configured to communicate with the user terminal 2, the company terminal 6, and the financial company server 10.

Further, the advance purchase support server 20 includes: a support money calculation unit 34 configured to calculate a support money to be provided to the user depending on the support money information for the advance purchase by each product and whether or not the option is selected; an advance purchase certificate issuing unit 32 configured to select an advance purchase for a specific product and issue an advance purchase certificate containing related information to the user who received the support money as a reward; a support money information manager 40 configured to provide advance purchase user information, information of companies and products, the support money information and advance purchase certificate information to the financial company server 10 to automatically give the support money as a loan; and a controller 44 configured to provide the support money to the user who has selected the advance purchase for a specific product as the reward, and control the advance purchase support server and the financial company server so as to automatically repay the loan by monitoring whether the advance purchase is executed.

Preferably, the advance purchase support server 20 further includes a user information manager 24 configured to store personal information of the user, unique identification information of the advance purchase support application 4 installed in the user terminal 2, product information to which the advance purchase is set, and advance purchase information thereof.

In particular, among the user information, important one is information about what the product contracts to consume in the future, and information on an actually purchased product. Since the product information with a contracted consumption is eventually debt information for the user, and the actual purchase information of the product is repayment information for the support money, it is necessary to accurately manage the information without being omitted.

Further, the advance purchase support server 20 further includes a certificate issue limit manager 36 configured to manage the advance purchase certificate to be issued within a credit rating of the user, a deposit balance of the user, or a consumption limit allowed to the user by the financial company.

The advance purchase certificate is configured to have the same legal effect as a debt certificate. Therefore, when the purchase of the advance purchase product is cancelled, or the purchase of the product is not executed, the debit for the support money and a loan interest is transferred to the user, and the limit of the advance purchase should be assigned by each user.

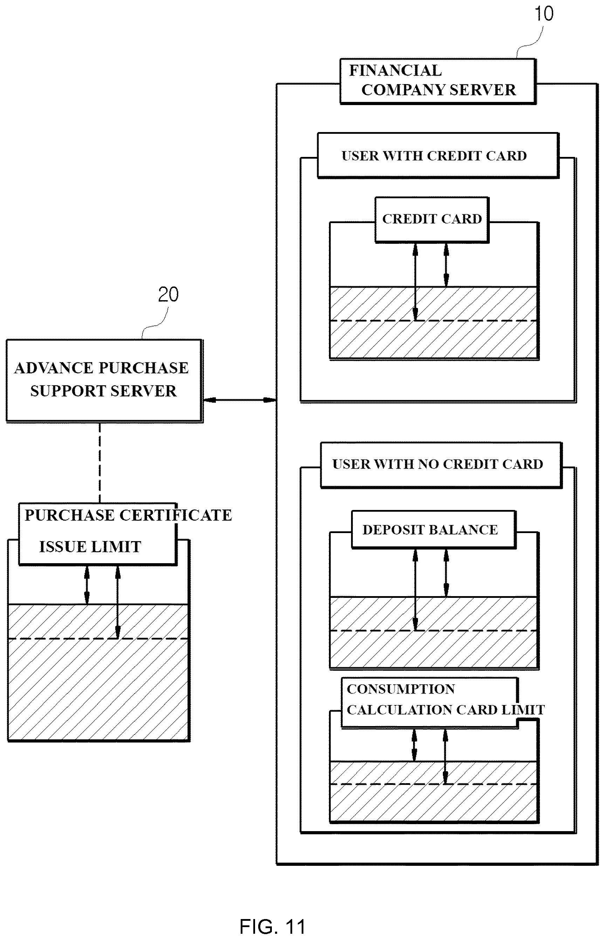

The limit of the advance purchase will be described with reference to FIG. 11.

Further, the advance purchase support server 20 further includes a repayment information manager 38 configured to update and manage repayment information processed by executing the purchase of a product in which the advance purchase is designated by the user, and the updated repayment information in the repayment information manager 38 is provided in a push manner so that the information may be shared by the user and the selling company.

Meanwhile, the advance purchase support server 20 further includes a non-executed certificate processer 42 configured to, when the user does not execute an actual purchase for the product designated for the advance purchase within an advance purchase execution period, process the advance purchase certificate as a non-executed certificate, and provide information so as to subtract the support money from points of the user accumulated in the financial company, generate a credit loan, or subtract the support money from the balance of the user.

The debit, in which the actual purchase of the product for the advance purchase is not executed, is transferred to the user. Therefore, various conventional methods may be applied to the solution of the debt. For example, when the user is a member of a specific financial company, and is limited so as to use the service in the processing system for supporting an advance purchase according to the embodiment of the present invention, the user's debt may be simply processed as a credit payment, or the debt may be repaid in a variety of ways such as a subtraction of the support money from the card points of the user.

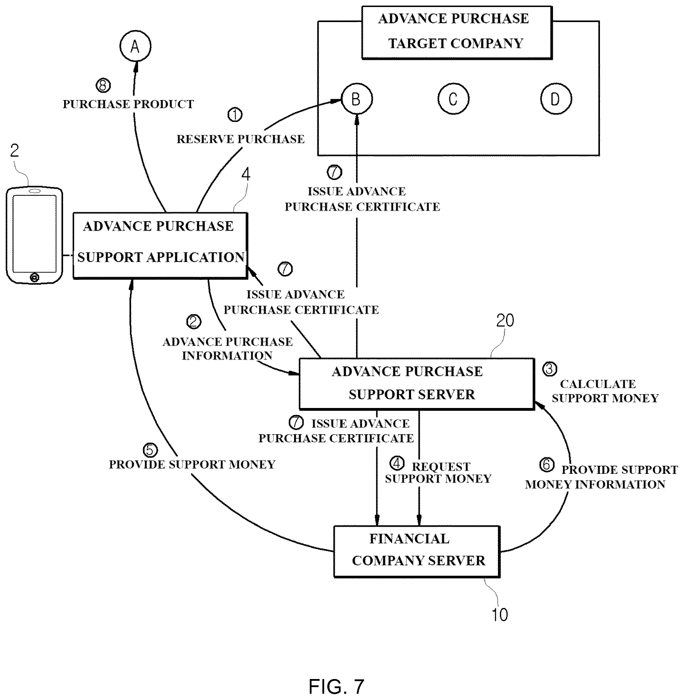

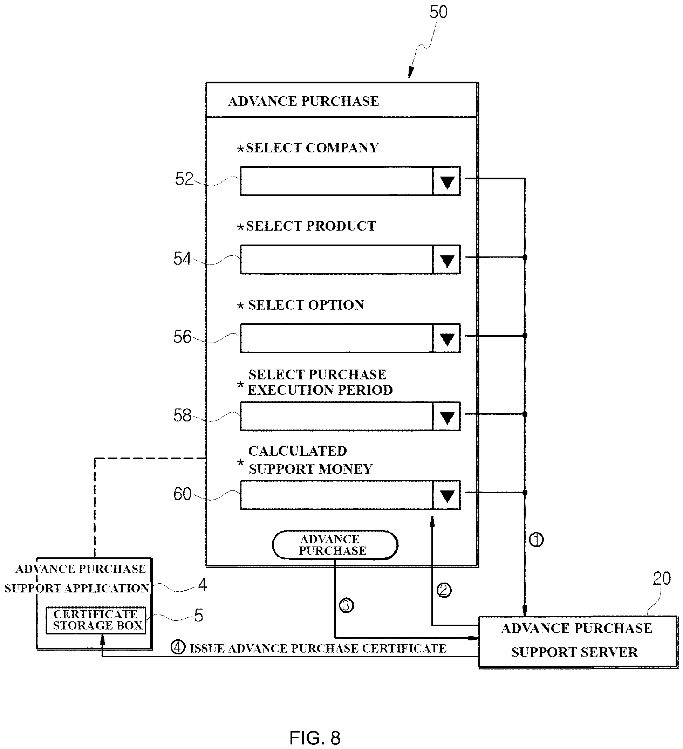

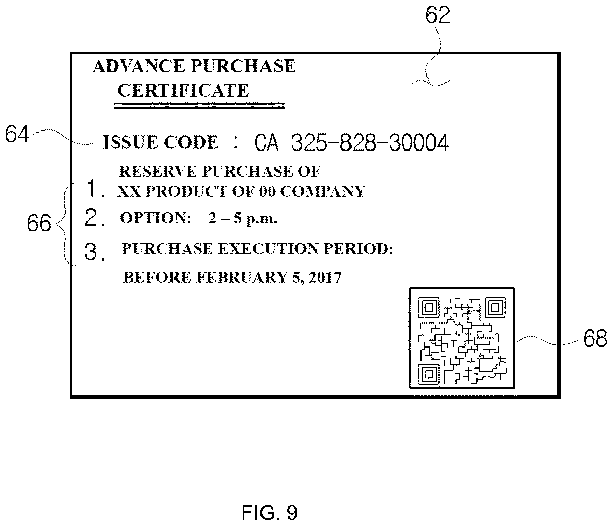

FIG. 7 is a schematic view illustrating processes of providing the support money and issuing an advance purchase certificate through the processing system for supporting an advance purchase according to the embodiment of the present invention, FIG. 8 is an exemplary view illustrating a screen for selecting advance purchase information in an application included in the processing system for supporting an advance purchase according to the embodiment of the present invention, and FIG. 9 is an exemplary view illustrating a configuration of the advance purchase certificate distributed through the processing system for supporting an advance purchase according to the embodiment of the present invention.

Referring to FIGS. 7 to 9, when providing the support money through the processing system for supporting an advance purchase according to the embodiment of the present invention, as described above, the user browses a plurality of advance purchase target companies, and the user may apply for the advance purchase in a state in which the target company and produce to be actually consumed in the future are designated.

In other words, the user has contracted the future consumption. As the reward, the user may receive a predetermined support money from the company. At this time, the advance purchase support server 20 issues advance purchase certificates to be an advance purchase target by each product, and provides the issued advance purchase certificates to the advance purchase support application 4, the company terminal 6, and the financial company server 10.

In addition, when the user purchases a product corresponding to the advance purchase certificate through the advance purchase support application 4, the support money is automatically repaid.

To this end, the user browses information on advance purchase target companies uploaded to the advance purchase support server 20 through the advance purchase support application 4, and the advance purchase support server 20 updates a list of browsing information of the user.

At this time, there is a possibility that separate advertisement costs may be generated when the user browses information on the specific product.

Then, the advance purchase support server 20 may provide the browsing information to the browsing target companies. At this time, calculation of advertisement costs may be performed.

At this time, the user should input advance purchase information to be transmitted to the advance purchase support server 20 through the advance purchase support application 4. An advance purchase information input page 50 includes: a company selection box 52 for selecting a company; a product selection box 54 for selecting a specific product of the company; an option selection box 56 for inputting an option selection; a selection box 58 for selecting a purchase execution period; and a display window 60 for displaying the calculated support money.

Meanwhile, it is preferable that the advance purchase certificate provided by the advance purchase support server 20 is automatically stored in the certificate storage box 5 separately partitioned in the advance purchase support application 4 installed in the user terminal 2.

Referring to FIG. 9, the advance purchase certificate 62 includes: issue code information 64 issued by the advance purchase support server 20; and product information 66 consisting of company information, product information, and option information including a visit time and use limit information.

Preferably, the advance purchase certificate 62 further includes a QR code 68 containing issue code information 64.

The user provides the QR code 68 or the issue code information 64 to the company and the advance purchase support server 20. The company again provides the QR code 68 or the issue code information 64 included in the advance purchase certificate 62 presented by the user to the advance purchase support server 20, so that the advance purchase support server 20 and the financial company server 10 may recognize the actual purchase action of the user.

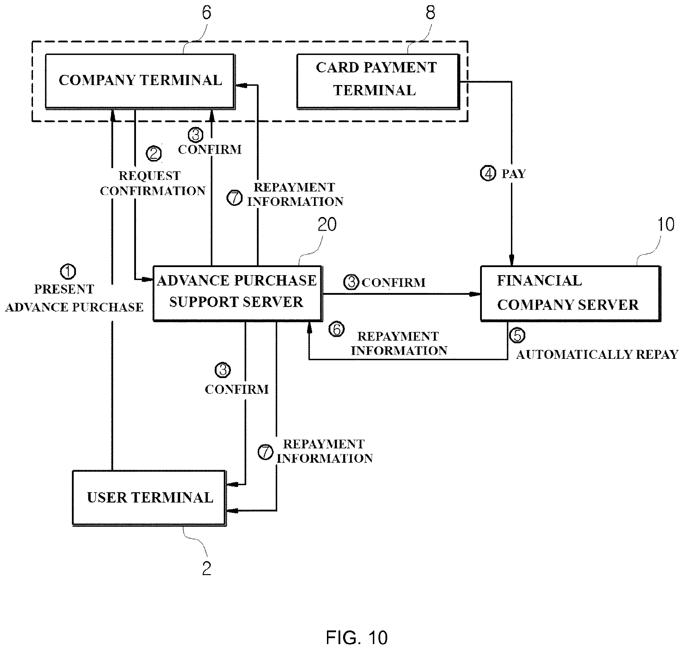

FIG. 10 is a block diagram illustrating a process of repaying the advance purchase certificate through the processing system for supporting an advance purchase according to the embodiment of the present invention.

Referring to FIG. 10, there is a payment method using a credit card and cash, for example, as a payment method used at the time of repayment of the advance purchase certificate through the processing system for supporting an advance purchase according to the embodiment of the present invention.

First, when the user actually pays for the purchase through the credit card, the user applies information on a specific advance purchase certificate and a payment signal for the advance purchase product to the company terminal 6 or the advance purchase support server 20 through the advance purchase support application 4.

At this time, the company terminal 6 may apply the advance purchase certificate information presented by the user to the advance purchase support server 20 to confirm whether the advance purchase certificate is a normal certificate. By this method, it is possible to confirm whether the user actually tries to purchase by the company.

Then, the advance purchase support server 20 provides the advance purchase certificate information to the financial company server 10.

In this state, when the user presents the credit card to the company to try a payment through a card payment terminal 8 provided in the company, the financial company server 10 receives a card payment request signal from the card payment terminal 8 of the company.

Then, the financial company server 10 automatically subtracts the support money included in the advance purchase certificate information, and transfers the balance after the subtraction to an account of the company.

Then, the financial company server 10 transmits the advance purchase certificate information and repayment information to the advance purchase support server 20, and the advance purchase support server 20 provides the repayment information to the company terminal 6 and the advance purchase support application 4.

Meanwhile, when purchasing an advance purchase product through the system of the present invention, payment may be performed with cash. In this case, the user transmits the advance purchase certificate information to the advance purchase support server 20 or the financial company server 10 through the advance purchase support application 4, and transfers a price of the product.

Then, the advance purchase support server 20 or the financial company server 10 transmits the advance purchase certificate information and a payment completion signal to the company terminal 6, and the advance purchase support server 20 or the financial company server 10 transfers a price from which the support money is subtracted, and transmits the advance purchase certificate information to the company terminal 6.

That is, when paying using the cash at the time of actual purchase, it is preferable that the advance purchase support server 20 or the financial company server 10 is the subject that performs payment processing, not the company.

Meanwhile, in the processing system for supporting an advance purchase according to the embodiment of the present invention, in a case of a product to be contracted for the future consumption, there is a possibility that a price fluctuation may occur between a time when the user applies for the advance purchase and the actual purchase time.

That is, when the price fluctuation occurs in the product corresponding to the specific advance purchase certificate, it is preferable that the advance purchase support server 20 processes so that the fluctuating amount in the price can be applied to the price of the product when actually purchasing the product by the user.

FIG. 11 is a block diagram illustrating a process of managing a personal limit of the advance purchase certificate distributed through the processing system for supporting an advance purchase according to the embodiment of the present invention.

Referring to FIG. 11, it is preferable to set a limit for avoiding a default state as much as possible in a range of providing the support money that can be supported secured on the commitment of the future consumption through the processing system for supporting an advance purchase according to the embodiment of the present invention, when the commitment is not executed.

Therefore, a conventional method of assigning a limit may be applied to the service provided by the processing system for supporting an advance purchase according to the embodiment of the present invention.

When the user has a credit card, it is possible to support in such a way that a total amount of the support money that can be received through the advance purchase does exceed the credit limit of the user.

This processing of the support limit is processed by the financial company server 10 or the advance purchase support server 20.

If the user does not have a credit card but has a cash card, it is possible to support in such a way that the total amount of the support money does exceed the balance of the user's cash card.

In addition, when the user does not have a credit card, the financial company server 10 may provide a consumption calculation card assigned with a certain limit to the user. Therefore, it is possible to support in such a way that the total amount of the support money does not exceed a limit amount of the consumption calculation card.

In this case, since most of users who will use the consumption calculation card may be a user who does not have economic activity, the consumption calculation card may be linked or connected to an account or credit card of the user's parent by applying the conventional technique upon actual use.

When the consumption calculation card is connected to the account of the user's parent in this way, the limit of the consumption calculation card may be changed by obtaining consent of the user's parent.

The support money may be paid within the limit as follows.

For example, when the user has the credit card, the financial company server 10 determines whether the credit limit of the user to whom the support money is to be paid through the advance purchase is greater than a sum of unpaid support money of the user, and pays the support money.

If the user does not have a credit card but has the cash card, the financial company server 10 determines whether the cash balance of the user to whom the support money is to be paid through the advance purchase is larger than the sum of the unpaid support money of the user, and determines payment of the support money.

When the financial company issues the consumption calculation card to the user, it is determined whether the consumption limit amount assigned by the financial company server 10 for each user is greater than the sum of unpaid support money of the user, and if the consumption limit amount assigned by each user is larger than the sum of the unpaid support money of the user, the support money is paid.

The limit of the future consumption commitment, that is, the advance purchase limit may fluctuate in real time depending on the repayment state.

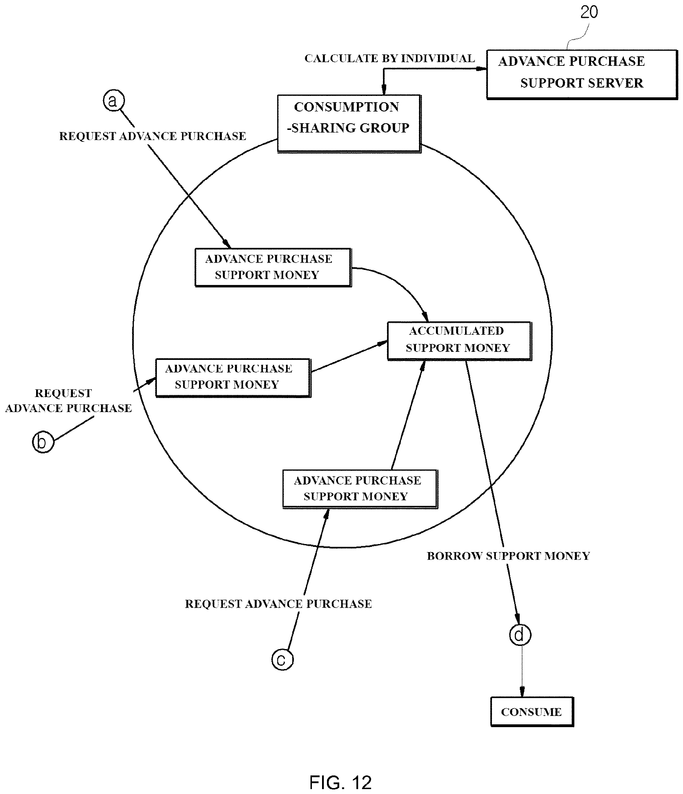

FIG. 12 is a schematic view illustrating an advance purchase support process to be processed in a group unit through the processing system for supporting an advance purchase according to the embodiment of the present invention.

Referring to FIG. 12, the processing system for supporting an advance purchase according to the embodiment of the present invention may accumulate the support money of the user and perform calculation and repayment processing so as to be used in a group unit.

That is, a plurality of users may form a consumption-sharing group, in which the support money is managed by accumulating so as to be jointly used, in the advance purchase support server 20, thereby processing so that the support money for the group purchase of the group members is managed by accumulating and being jointly used.

At this time, the advance purchase support server 20 manages in such a way that accumulated amounts and used amounts of the accumulated support moneys by each individual of the group members are calculated, thereby completing the calculation of the support money upon withdrawal from the group.

For example, when a user a or a user b performs the advance purchase for future inevitable consumption, the support money for the advance purchase may be accumulated to be jointly used by the members included in the group, and a user d may use a portion of the accumulated support money in the current consumption.

At this time, any one user of the members included in the group may withdraw from the group. At the time of withdrawal, the used amount of the accumulated support money should be personally calculated.

Therefore, the advance purchase support server 20 may calculate the accumulated amount and the used amount of the accumulated support money by each individual of the group members and may calculate the amount at the time of withdrawal from the group.

Such a method may be used when forming a consumption-sharing group by family members or very close acquaintances, and using the support money in the current purchase of the product, which is obtained by applying the advance purchase for the inevitable consumption products in advance. In addition, since the co-accumulated support money may be used when purchasing the product at the present time, the economic burden may be reduced overall when purchasing expensive household appliances or automobiles.

In particular, when purchasing products necessary for a large family event such as a wedding ceremony, a 60^{th}-birthday party, or a first-birthday party, it is possible to consume using the accumulated support money, and pay the used support money by dividing in the future. In this case, it may be used in a method such as a private fund of a new concept.

To this end, the user establishes a group in the advance purchase support server 20 so that the advance purchase support money may be accumulated in a group unit, and the advance purchase support server registers information on the group members therein.

Then, the financial company server 10 may provide the support money generated at the time of advance purchase by the user in the group unit, and the advance purchase support server 20 accumulates the support money in the group unit.

The information on the group members is shared by the advance purchase support server 20 and the financial company server 10.

When the support money is accumulated in the group unit, the advance purchase support server 20 calculates the accumulated support money by each individual at the time of using the accumulated support money.

Meanwhile, the processing system and method for supporting an advance purchase of the present invention are not limited to only the above described embodiments, but may be variously changed without departing from the technical subjects thereof.

### [Description of Reference Numerals]

- 2:: User terminal
- 4:: Advance purchase support application
- 6:: Company terminal
- 8:: Card payment terminal
- 10:: Financial company server
- 20:: Advance purchase support server

## Claims

1. A processing system for supporting an advance purchase, comprising:
a user terminal 2 having an advance purchase support application 4 installed therein, which is configured to allow a user to browse member company group information, request an advance purchase by designating a predetermined product, receive a support money as a reward for the advance purchase, and store advance purchase information of the user;
a financial company server 10 configured to provide a user's advance purchase support money for the product in a loan form, and automatically repay the support money at the time of actual payment for the product; and
an advance purchase support server 20 configured to receive member companies that contract providing the support money for the advance purchase to upload the member company group information so as to be browsed by the user, calculate the support money according to a support rate set for each company and each product, request the financial company server 10 to pay the support money and receive the same, and process actual purchase information on the advance purchase product.

2. The system according to claim 1, wherein, when selecting a company to receive the advance purchase support money, the user selects a plurality of companies, and the advance purchase support server 20 processes so that the support money is added up and used.

3. The system according to claim 1, wherein the member company group information provided by the advance purchase support server 20 includes support rate information by company and support rate information by product, and the information is provided so that the support rates are displayed as cash applied to the product, and an actual purchase deadline for the advance purchase product is displayed.

4. The system according to claim 1, wherein the member company group information provided by the advance purchase support server 20 further includes option information which is condition information so as to further support an additional support money.

5. The system according to claim 1, wherein the advance purchase support server 20 issues advance purchase certificates to be an advance purchase target by each product, and provides the issued advance purchase certificates to the advance purchase support application 4, the company terminal 6, and the financial company server 10.

6. The system according to claim 4, wherein the option information includes different support money information depending on an actual purchase time zone matched by each company and by each product.

7. The system according to claim 4, wherein, when the actual purchase is performed earlier than the actual purchase deadline, the option information may be set so as to provide larger additional support money than a case of performing the actual purchase at a later time.

8. The system according to claim 1, wherein, when the user has a credit card, the support money is provided so that a sum thereof does not exceed a credit limit of the user.

9. The system according to claim 1, wherein, if the user does not have a credit card but has a cash card, the support money is provided so that a sum thereof does not exceed a balance of the user's cash card.

10. The system according to claim 1, wherein, when the user does not have a credit card, the support money is provided so that a sum thereof does not exceed a limit amount of a consumption calculation card provided by the financial company server 10.

11. The system according to claim 5, wherein an advance purchase certificate 62 includes issue code information 64 issued by the advance purchase support server 20; and
product information 66 consisting of company information, product information, and option information including a visit time and use limit information.

12. The system according to claim 11, wherein the advance purchase certificate 62 further includes a QR code 68 containing issue code information 64.

13. The system according to claim 1, wherein, when the user actually pays for the advance purchase product, the advance purchase support server 20 receives a payment request signal for the advance purchase product from the advance purchase support application 4 or the company terminal 6, and provides payment request information thereof to the financial company server 10.

14. The method according to claim 1, wherein, when the user actually pays for the advance purchase product, the financial company server 10 automatically subtracts the support money for the product from a payment amount, and provides a balance to the company, thereby a repayment for the support money is automatically performed.

15. The system according to claim 1, wherein a plurality of users form a consumption-sharing group, in which the support money is managed by accumulating so as to be jointly used, in the advance purchase support server 20, thereby processing so that the support money for the group purchase of the group members is managed by accumulating and being jointly used.

16. The system according to claim 15, wherein the advance purchase support server 20 manages in such a way that accumulated amounts and used amounts of the accumulated support moneys by each individual of the group members are calculated, thereby completing a calculation of the support money upon withdrawal from the group.

17. The system according to claim 1, wherein the advance purchase support server 20 comprises:
a company information manager 26 configured to provide the support money for an advance purchase request of the user, and register and manage information on a member company that requests for automatic generation of a loan;
a product information manager 28 configured to register and manage product information to be sold and support money information for the advance purchase by each product;
an option information manager 30 configured to register and manage option information to which an additional support money is provided for the advance purchase by each product;
a support money calculation unit 34 configured to calculate a support money to be provided to the user depending on the support money information for the advance purchase by each product and whether or not the option is selected;
an advance purchase certificate issuing unit 32 configured to select an advance purchase for a specific product and issue an advance purchase certificate containing related information to the user who received the support money as a reward;
a support money information manager 40 configured to provide advance purchase user information, information of companies and products, the support money information and advance purchase certificate information to the financial company server 10 to automatically give the support money as a loan; and
a controller 44 configured to provide the support money to the user who has selected the advance purchase for a specific product as the reward, and control the advance purchase support server and the financial company server so as to automatically repay the loan by monitoring whether the advance purchase is executed.

18. The system according to claim 1, wherein the advance purchase support server 20 further comprises:
a user information manager 24 configured to store personal information of the user, unique identification information of the advance purchase support application 4 installed in the user terminal 2, product information to which the advance purchase is set, and advance purchase information thereof.

19. The system according to claim 1, wherein the advance purchase support server 20 further comprises:
a certificate issue limit manager 36 configured to manage the advance purchase certificate to be issued within a credit rating of the user, a deposit balance of the user, or a consumption limit allowed to the user by the financial company.

20. The system according to claim 1, wherein the advance purchase support server 20 further comprises:
a repayment information manager 38 configured to update and manage repayment information processed by executing the purchase of a product in which the advance purchase is designated by the user.

21. The system according to claim 1, wherein the advance purchase support server 20 further comprises:
a non-executed certificate processer 42 configured to, when the user does not execute an actual purchase for the product designated for the advance purchase within an advance purchase execution period, process the advance purchase certificate as a non-executed certificate, and provide information so as to subtract the support money from points of the user accumulated in the financial company, generate a credit loan, or subtract the support money from the balance of the user.

22. A method for supporting an advance purchase, comprising the steps of:
a) requesting an advance purchase support server 20 for an advance purchase by selecting a predetermined company among advance purchase target companies uploaded to the advance purchase support server 20 and a product thereof through an advance purchase support application 4 installed in a user terminal;
b) calculating a support money for advance purchase of the product by the advance purchase support server 20;
c) requesting a financial company server 10 for the support money for advance purchase of the product by the advance purchase support server 20;
d) providing the support money to the user by the financial company server 10;
e) issuing an advance purchase certificate to the company and the user by the advance purchase support server 20;
f) purchasing a product corresponding to the advance purchase certificate through the advance purchase support application 4 of the user terminal to repay the support money.

23. The method according to claim 22, further comprising the steps of: before step a)
attracting a company to provide a predetermined support money to the user in advance for the product selected by the advance purchase of the user by the advance purchase support server 20; and
uploading company information.

24. The method according to claim 22, further comprising the step of: before step a)
establishing a group in the advance purchase support server 20 so that an advance purchase support money is accumulated in a group unit, and registers information on group members; and
further comprising the steps of: in step d)
providing the support money in the group unit by the financial company server 10; and
accumulating the support money in the group unit by the advance purchase support server 20.

25. The method according to claim 22, further comprising the step of: after the step f)
when the support money is accumulated in the group unit, calculating the accumulated support money by each individual upon using the accumulated support money, by the advance purchase support server 20.

26. The method according to claim 22, wherein the step a) further comprises the steps of:
browsing information on advance purchase target companies uploaded to the advance purchase support server 20 through the advance purchase support application 4;
updating a list of browsing information of the user by the advance purchase support server 20; and
providing the browsing information to a browsing target company by the advance purchase support server 20.

27. The method according to claim 22, wherein the step f) further comprises the steps of:
applying specific advance purchase certificate information and a payment signal for an advance purchase product to a company terminal 6 or the advance purchase support server 20 through the advance purchase support application 4;
providing the advance purchase certificate information to the financial company server 10 by the advance purchase support server 20;
receiving a card payment request signal from a card payment terminal 8 of a company by the financial company server 10;
automatically subtracting the support money included in the advance purchase certificate information by the financial company server 10; and
transferring a balance from which the support money is subtracted to an account of the company by the financial company server 10.

28. The method according to claim 27, further comprising the steps of:
transmitting the advance purchase certificate information and repayment information of the support money to the advance purchase support server 20 by the financial company server 10; and
providing the repayment information to the company terminal 6 and the advance purchase support application 4 by the advance purchase support server 20.

29. The method according to claim 22, further comprising the step of: in the step d)
determining whether a credit limit of the user to whom the support money is to be paid through the advance purchase is greater than a sum of unpaid support money of the user by the financial company server 10.

30. The method according to claim 22, further comprising the steps of: in the step d)
determining whether a cash balance of the user to whom the support money is to be paid through the advance purchase is larger than a sum of the unpaid support money of the user by the financial company server 10; or
determining whether a consumption limit amount assigned by the financial company server 10 for each user is greater than a sum of unpaid support money of the user.

31. The method according to claim 22, wherein, in step a)
when a user sets an advance purchase for a specific company and a certain amount,
further comprising the step of: in the step b) calculating a certain ratio for an advance purchase amount by the specific company as the support money to request a support.

32. The method according to claim 22, further comprising the steps of: in the step f)
when the advance purchase support application 4 purchases a product corresponding to a specific advance purchase certificate to repay the support money, if cash is selected as a payment means thereof,
transmitting the advance purchase certificate information to the advance purchase support server 20 or the financial company server 10, and transferring a price of the product by the advance purchase support application 4;
transmitting the advance purchase certificate information and a payment completion signal to the company terminal 6 by the advance purchase support server 20 or the financial company server 10; and
transmitting a price obtained by subtracting the support money to an affiliate, and transmitting advance purchase certificate information by the advance purchase support server 20 or the financial company server 10.

33. The method according to claim 22, wherein, further comprising the step of, in the step f)
when a price fluctuation occurs in the product corresponding to the specific advance purchase certificate, processing so that a fluctuating amount in the price is applied to the price of the product when actually purchasing the product by the user, by the advance purchase support server 20.
